# EUROPEAN PATENT SPECIFICATION

(11) **EP 4 164 160 B1**
(45) Date of publication and mention of the grant of the patent: **30.09.2026**
(21) Application number: 21817897.8
(22) Date of filing: 02.03.2021
(51) Int. Cl.: H04L 5/00

(54) **DMRS ALLOCATING METHOD, NR BASE STATION, AND STORAGE MEDIUM**
DMRS-ZUWEISUNGSVERFAHREN, NR-BASISSTATION UND SPEICHERMEDIUM
PROCÉDÉ D'ATTRIBUTION DE DMRS, STATION DE BASE NR, ET SUPPORT DE STOCKAGE

(30) Priority: 03.06.2020 CN 202010496307
(43) Date of publication of application: 12.04.2023
(73) Proprietor: ZTE Corporation, Shenzhen, Guangdong 518057 (CN)
(72) Inventor: LI, Guozhou, Shenzhen, Guangdong 518057 (CN); LIU, Dingchun, Shenzhen, Guangdong 518057 (CN)
(74) Representative: Gevers Patents
(86) International application number: PCT/CN2021/078570
(87) International publication number: WO 2021/244083

(56) References cited:
- CN-A- 107 248 905
- CN-A- 110 022 193
- CN-A- 110 495 116
- CN-A- 110 912 656
- CN-A- 111 147 206
- US-A1- 2012 300 728
- US-A1- 2019 393 937

## Description

### Field of the Invention

The present disclosure relates to the technical field of communications, in particular to a DMRS allocating method, an NR base station, and a storage medium.

### Background of the Invention

With the rapid development of 5G technology, there are a variety of 5G terminals on the market. In some cases, once a new radio (NR) cell is successfully configured, after a user equipment (UE) accesses a network, demodulation reference signal (DMRS) related high-level configurations, such as DMRS-Type, DMRS-Additional Position, maxLength, scramblingID0, scramblingID1, etc. all have been fixed. Due to the variety of modem models used in UEs and different positions of the UEs relative to a base station, the demodulation abilities of the UEs are different, resulting in that UEs at the edge of the cell and UEs with poor demodulation abilities suffer from low spectrum efficiency.

US2012300728A1 relates to a method and apparatus which transmit/receive at least one demodulation reference signal by using a CDM group and/or a transmission rank of a user device that have been used to transmit the at least one demodulation reference signal for the user device, an OCC that has been used to spread the demodulation reference signal, etc.

### Summary of the Invention

The present disclosure provides a DMRS allocating method, an NR base station, and a storage medium.

In order to achieve the above objective, an embodiment of the present disclosure provides a DMRS allocating method, which is defined in claim 1.

Further advantageous embodiments of the present disclosure are indicated in the dependent claims.

The scope of the invention is defined and limited by the appended independent claims. It is to be understood that both the forgoing general description and the following detailed description are exemplary only, and are not restrictive of the present disclosure.

### Brief Description of the Drawings

Fig. 1 is a schematic flow diagram of a DMRS allocating method provided by an embodiment of the present disclosure.
Fig. 2 is a schematic scene graph of a base station according to the present disclosure and a UE.
Fig. 3 is a schematic flow diagram of another DMRS allocating method provided by an embodiment of the present disclosure.
Fig. 4 is a schematic flow diagram of another DMRS allocating method provided by an embodiment of the present disclosure.
Fig. 5 is a schematic flow diagram of another DMRS allocating method provided by an embodiment of the present disclosure.
Fig. 6 is a schematic block diagram of a structure of an NR base station provided by an embodiment of the present disclosure.

### Detailed Description of the Embodiments

The technical solutions in the embodiments of the present disclosure will be clearly and completely described below in conjunction with the accompanying drawings in the embodiments of the present disclosure. Apparently, the embodiments described are only part of the embodiments of the present disclosure, and not all of them. Based on the embodiments in the present disclosure, all other embodiments obtained without creative labor by those of ordinary skill in the art should fall within the scope of protection of the present disclosure.

The flow diagrams shown in the accompanying drawings are illustrative only, and they are not necessarily inclusive of all of the contents and operations/steps, nor are necessarily performed in the order depicted. For example, some operations/steps can also be split apart, combined together or partially combined, so an actual order of execution may change depending on an actual situation.

An embodiment of the present application provides a DMRS allocating method, an NR base station, and a storage medium, which involve at least one user equipment (UE) and at least one base station.

As an example, the UE may be a mobile phone, a tablet computer, a notebook computer, a television, etc.

Implementations of the present disclosure will be described in detail below in conjunction with the accompanying drawings. The following embodiments and the features in the embodiments can be combined with one another as long as there is no conflict.

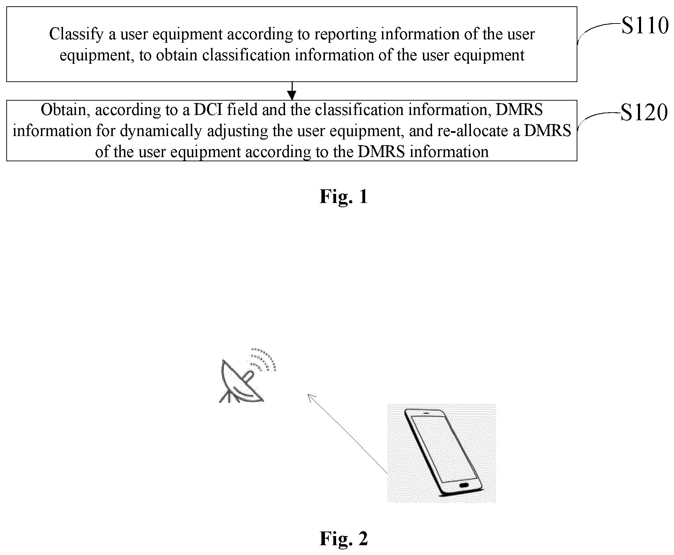

Referring to Fig. 1, Fig. 1 is a schematic flow diagram of a DMRS allocating method provided by an embodiment of the present disclosure.

As shown in Fig. 1, provided in this embodiment is a DMRS allocating method, which includes the following steps S110 to S120.

At step S110, a UE is classified according to reporting information of the UE to obtain classification information of the UE.

As an example, as shown in Fig. 2, reporting information sent by an online UE is received, and the UE is classified according to the reporting information of the UE, there being at least one UE. The reporting information includes information regarding modulation and coding scheme (MCS), channel quality indicator (CQI), quadrature amplitude modulation (QAM), etc. Through the reporting information, the UE is classified according to a preset classification mode to obtain classification information of the UE. If there are a plurality of UEs, classification information of each of the UEs is obtained, which includes a class and a classification level.

In an embodiment, a UE is classified according to reporting information of the UE, including: determining, according to QAM information, a modulation mode currently used in the UE and a first equipment classification strategy related to the currently used modulation mode of the UE; and based on the first equipment classification strategy, determining a class of the UE according to MCS information and CQI information.

For implementation, the reporting information includes MCS information, QAM information and/or CQI information. Through the QAM information, a modulation mode currently used in the UE and a first equipment classification strategy related to the currently used modulation mode of the UE are determined. The modulation mode is an uplink and downlink modulation mode, and the modulation mode of the current UE is determined by means of a QAM parameter in the QAM information. For example, in the case that the QAM parameter is 16, the uplink and downlink modulation mode of the UE is 16QAM; alternatively, in the case that the QAM parameter is 64, the uplink and downlink modulation mode of the UE is determined as 64QAM. Through the uplink and downlink modulation mode of the UE, a first equipment classification strategy related to the uplink and downlink modulation mode currently used in the UE is determined. Based on the first equipment classification strategy, a class of the UE is determined according to the MCS information and the CQI information in the reporting information. For example, the first equipment classification strategy is a comparison strategy, in which the MCS information and the CQI information each are compared with preset threshold values. When the MCS information and the CQI information are equal to the preset threshold values, the UE is determined as a first class, and when the MCS information and the CQI information are greater than or less than the preset threshold values, the UE is determined as a second class.

In an embodiment, based on the first equipment classification strategy, determining a class of the UE according to MCS information and CQI information includes: determining, when the modulation mode is a first preset modulation mode, whether the MCS information is greater than a first preset threshold value and whether the CQI information is greater than a second preset threshold value; and determining, when the MCS information is greater than the first preset threshold value and the CQI information is greater than the second preset threshold value, the UE as a first class.

As an example, in the case that the QAM parameter obtained is 64 or greater than 64, the uplink and downlink modulation mode of the UE is determined as 64QAM, i.e., a first modulation mode. Through the uplink and downlink modulation mode of 64QAM, a first equipment classification strategy related to the currently used uplink and downlink modulation mode of the UE is determined as: $Y = {MCS}_{max} \left({MCS}_{max}\div 4\right) + RI + log 2 \left(n\right) - 6 + m + r and CQI - \frac{CQI}{3} + S .$

According to the MCS information and the CQI information, a classification mode of the UE is determined. In this case, *MCS*ₘₐₓ represents the maximum value of configuration currently used in a network; MCS represents a scheduling value allocated to the UE by the network at a current moment; m and s are positive numbers, and are determined according to actual performance of the network; r is a punishment level to avoid frequent reallocation of DMRS resources to UE with variable channel quality by a network side interface, which can be increased or reduced in a cumulative manner according to demand; a value range of n is 4, 16, 64, etc.; and RI represents the number of streams currently used in the UE.

Judgment regarding whether the MCS information is greater than the first preset threshold value and whether the CQI information is greater than the second preset value are performed. If the MCS information is greater than the first preset threshold value and the CQI information is greater than the second preset value, then the UE is determined as a first class; and if the MCS information is less than or equal to the first preset threshold value and the CQI information is less than or equal to the second preset threshold value, then the UE is determined as a third class. For example, in the case that it is obtained that *MCS*ₘₐₓ is 28, m is 1, s is 1, r is 1, and n is 64, the first preset threshold value Y obtained is 23+RI, and the second preset threshold value is $CQI - \frac{CQI}{3} + 1$ .

If it is obtained that the MCS parameter is greater than 23+RI and the CQI parameter is greater than $CQI - \frac{CQI}{3} + 1$,
then the UE is determined as the first class, such as a UE of class A; and
if it is obtained that the MCS parameter is less than or equal to 23+RI and the CQI parameter is less than or equal to $CQI - \frac{CQI}{3} + 1$,
then the UE is determined as the third class, such as a UE of class B.

In an embodiment, based on the first equipment classification strategy, determining a class of the UE according to MCS information and CQI information, includes: determining, when the modulation mode is a second preset modulation mode, whether the MCS information is less than a third preset threshold value and whether the CQI information is less than a fourth preset threshold value; and determining, when the MCS information is less than the third preset threshold value and the CQI information is less than the fourth preset threshold value, the UE as a second class.

As an example, in the case that the QAM parameter obtained is 16 or less than 16, the uplink and downlink modulation mode of the UE is determined as 16QAM, i.e., a second modulation mode. Through the uplink and downlink modulation mode of 16QAM, a first equipment classification strategy related to the currently used uplink and downlink modulation mode of the UE is determined as: $Y = \left({MCS}_{max}\div 4\right) + \left({RI}_{max}-RI\right) - log 2 \left(n\right) + 6 + m - r and \frac{CQI}{3} + S .$

According to the MCS information and the CQI information, a classification mode of the UE is determined. In this case, *MCS*ₘₐₓ represents the maximum value of configuration currently used in a network; MCS represents a scheduling value allocated to the UE by the network at a current moment; m and s are positive numbers, and are determined according to actual performance of the network; r is a punishment level to avoid frequent reallocation of DMRS resources to UE with variable channel quality by a network side interface, which can be increased or reduced in a cumulative manner according to demand; a value range of n is 4, 16, 64, etc.; and *RI*ₘₐₓ represents the number of streams currently used in the UE.

Judgment regarding whether the MCS information is less than the third preset threshold value and whether the CQI information is greater than the fourth preset threshold value are performed. If the MCS information is less than the third preset threshold value and the CQI information is less than the fourth preset threshold value, then the UE is determined as a second class; and if the MCS information is greater than or equal to the third preset threshold value and the CQI information is greater than or equal to the fourth preset threshold value, then the UE is determined as the third class. For example, in the case that it is obtained that *MCS*ₘₐₓ is 28, *RI*ₘₐₓ is 4, m is 1, s is 1, r is 1, and n is 64, it is obtained that the first preset threshold value Y is 11-RI, and the second preset threshold value is $\frac{CQI}{3} - 1$*.*

If it is obtained that the MCS parameter is less than 11-RI and the CQI parameter is less than $\frac{CQI}{3} - 1$,
then the UE is determined as the second class, such as a UE of class C; and
if it is obtained that the MCS parameter is greater than or equal to 11-RI and the CQI parameter is greater than or equal to $\frac{CQI}{3} - 1$,
then the UE is determined as the third class, such as a UE of class B.

At step S120, DMRS information for dynamically adjusting the UE is obtained according to a DCI (Downlink Control Information) field and the classification information, and a DMRS of the UE is re-allocated.

As an example, the classification information of the UE is obtained at the network side interface, and the DMRS information for dynamically adjusting the UE is obtained according to the DCI field and the classification information of the UE. According to definition of DCI format, fields are newly added or expended beyond bits of the related DCI format, respectively, for uplink service or downlink service. Time domain and/or frequency domain resource in the DCI field is determined according to the classification information of the UE, thereby obtaining the DMRS information for dynamically adjusting the UE. Based on the classification information of the UE and the time domain and/or frequency domain resource related to the classification information, a DMRS of the UE is re-allocated.

In the embodiment of the present disclosure, the UE is classified according to the reporting information of the UE to obtain the classification information of the UE. Then, the DMRS information for dynamically adjusting the UE is obtained according to the DCI field and based on the classification information of the UE, and the DMRS of the UE is re-allocated based on the DMRS information, so as to solve the problem of DMRS of a UE with a poor demodulation ability and of a UE at the edge of the cell to improve the spectrum efficiency of the NR cell.

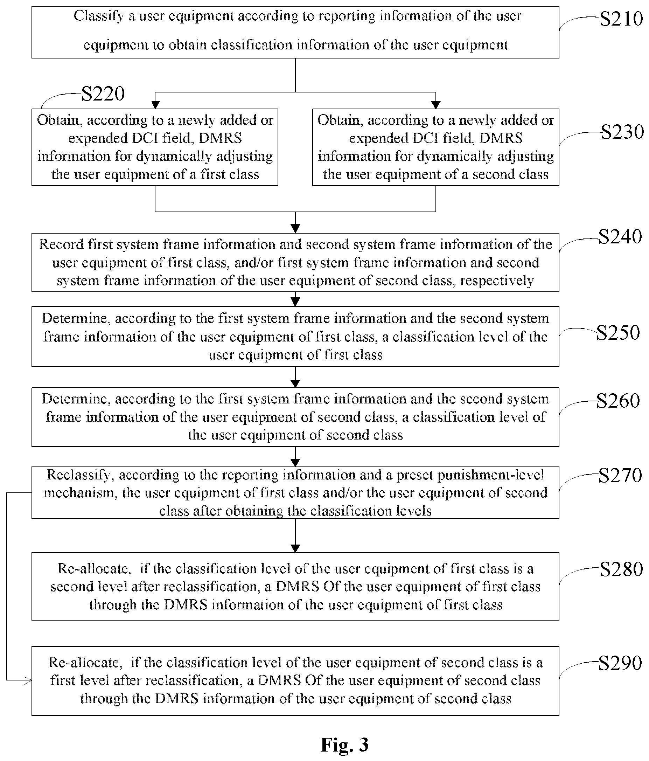

Referring to Fig. 3, Fig. 3 is a schematic flow diagram of another DMRS allocating method provided by an embodiment of the present disclosure.

As shown in Fig. 3, the embodiment provides a DMRS allocating method, which includes the following steps S210 to S290.

At step S210, a UE is classified according to reporting information of the UE to obtain classification information of the UE.

As an example, as shown in Fig. 2, the reporting information sent by the online UE is received, and the UE is classified according to the reporting information of the UE, there being at least one UE; and the reporting information includes information regarding modulation and coding scheme (MCS), block error rate (Bler), channel quality indicator (CQI), quadrature amplitude modulation (QAM), etc. Through the reporting information, the UE is classified according to a preset classification mode to obtain classification information of the UE. If there are a plurality of UEs, the classification information of each of the UEs is obtained, which includes a class and a classification level, the class including a first class, a second class or a third class.

At step S220, DMRS information for dynamically adjusting the UE of first class is obtained according to a newly added or expanded DCI field.

By adding a field to DCI or expanding fields of DCI, four fields are newly added beyond the bits of the DCI, or four fields are expended beyond the bits of the DCI. For example, the first two fields represent an increase in time domain resource, i.e. an increase of the maximum length. 00 represents no increase in the time domain resource, 01 represents that the time domain resource increases by one OFDM symbol, 11 represents that the time domain resource increases by three OFDM symbols, etc. The last two fields represent an increase or decrease in frequency domain resource, i.e., an increase of a value K in the frequency domain resource. 00 represents K/2, 01 represents K/4, 10 represents 2K, 11 represents 4K, etc. By obtaining the classification information of the UE, decreasing of the time domain resource or frequency domain resource is determined while it is based on the newly added DCI fields or the expended DCI fields.

For example, in the case that the UE is of the first class, based on the newly added DCI fields, the expended DCI fields, or a decrease of the frequency domain resource after dynamic adjustment, for example, the frequency domain resource of the current UE of first class being K and the last two fields of the newly added DCI fields or the expended DCI fields being 00, it is obtained that a decrease of the frequency domain resource of the UE of first class after dynamic adjustment is K/2. In the case that it is the UE of third class, there is no handle to be performed.

At step S230, DMRS information for dynamically adjusting the UE of second class is obtained according to the newly added or expended DCI field.

By adding a field to DCI or expending fields of DCI, four fields are newly added beyond the bits of the DCI, or four fields are expended beyond the bits of the DCI. For example, the first two fields represent an increase in the time domain resource, i.e. an increase of the maximum length. 00 represents no increase in the time domain resource, 01 represents that the time domain resource increases by one OFDM symbol, 11 represents that the time domain resource increases by three OFDM symbols, etc. The last two fields represent an increase or decrease in the frequency domain resource, i.e., an increase of a value K in the frequency domain resource. 00 represents K/2, 01 represents K/4, 10 represents 2K, 11 represents 4K, etc. By obtaining the classification information of the UE, increasing of time domain resource or frequency domain resource is determined while it is based on the newly added DCI fields or the expended DCI fields.

For example, in the case that the currently used frequency domain resource of the UE of second class is K, the first two fields of the newly added DCI fields or the expended DCI fields are 01 and the last two fields are 10, it is obtained that an the increased resource of the UE of second class after dynamic adjustment is 2K and/or an increase of the time domain resource is one OFDM symbol. In the case that the UE is of the third class, no handle is performed on the UE of third class.

At step S240, first system frame information and second system frame information of the UE of first class, and/or first system frame information and second system frame information of the UE of second class are recorded, respectively.

As an example, the moment at which the reporting information of the UE is received is determined and serves as a first moment. Upon the classification information of the UE is obtained, the first system frame information of the UE is counted statistically. For example, there are 30 UEs, in which ten are the UEs of first class, ten are the UEs of second class, and ten are the UEs of third class. Ten pieces of first system frame information of the UEs of each class are recorded, respectively. Then, ten pieces of system frame information of the UEs of each class are statistically counted, respectively, and the current moment is determined as a second moment. From the second moment, the second system frame information of the UEs of each class is statistically counted, respectively.

At step S250, according to the first system frame information and the second system frame information of the UE of first class, a classification level of the UE of first class is determined.

Comparison is performed between the first system frame information and the second system frame information of the UE of each class to determine a classification level of the UE of each class. For example, in the case that a UE is the UE of first class, the first system frame information and the second system frame information of the UE of first class are obtained, and the first system frame information and the second system frame information of the UE of first class are compared with each other to obtain the classification level of the UE of first class.

In an embodiment, the first system frame information includes first spectrum efficiency, and the second system frame information includes second spectrum efficiency. A classification level of the UE of first class being determined includes: determining, according to the first spectrum efficiency and the second spectrum efficiency of the UE of first class, a first equipment rating strategy related to the first spectrum efficiency and the second spectrum efficiency of the UE of first class; and obtaining, based on the first equipment rating strategy as well as the first spectrum efficiency and the second spectrum efficiency of the UE of first class, the classification level of the UE of first class.

As an example, the first system frame information includes first spectrum efficiency, and the second system frame information includes second spectrum efficiency. In this case, it is counted statistically that there are at least one piece of first system frame information and at least one piece of second system frame information. Upon the first spectrum efficiency and the second spectrum efficiency of the UEs of first class are obtained, in the case that, for example, there are ten UEs of first class, the UEs are numbered as A1, A2 and so on. Their first spectrum efficiency are counted statistically as S1-A1, S1-A2, etc. and their second spectrum efficiency are as S2-A1, S2-A2, etc., and a first equipment rating strategy of the UEs of first class is determined accordingly. Through the first equipment rating strategy, a classification level of a UE of first class is obtained based on the first spectrum efficiency and the second spectrum efficiency of the UE of first class. For example, the first equipment rating strategy obtained is configured to compare the first spectrum efficiency with the second spectrum efficiency of the UE of first class, if the second spectrum efficiency is greater than the first spectrum efficiency, the classification level of the UE of first class is determined as a first level; if the second spectrum efficiency is equal to the first spectrum efficiency, the classification level of the UE of first class is determined as a second level; and if the second spectrum efficiency is less than the first spectrum efficiency, the classification level of the UE of first class is determined as a third level.

In an embodiment, a classification level of a UE of first class being obtained includes: obtaining, if the second spectrum efficiency of the UE of first class is greater than the first spectrum efficiency by a first preset range, the classification level of the UE of first class as a first level; and obtaining, if the second spectrum efficiency of the UE of first class is greater than the first spectrum efficiency by a second preset range, the classification level of the UE of first class as a second level.

If the second spectrum efficiency of the UE of first class is greater than the first spectrum efficiency by a value within the first preset range, then the classification level of the UE of first class is obtained as the first class; if the second spectrum efficiency of the UE of first class is greater than the first spectrum efficiency by a value within the second preset range, then the classification level of the UE of first class is obtained as the second class; and if the second spectrum efficiency of the UE of first class is less than the first spectrum efficiency, then the classification level of the UE of first class is obtained as a third class.

For example, upon obtaining the first spectrum efficiency S1 and the second spectrum efficiency S2 of the UE of first class, the first spectrum efficiency S1 and the second spectrum efficiency S2 are compared with each other. If S2 is greater than S1, and a gain therebetween is greater than 5%, then the classification level of the UE of first class is obtained as the first level; if S2 is greater than S1, and the gain therebetween is greater than 0 to 5%, then the classification level of the UE of first class is obtained as the second level; and if S2 is less than S1, then the classification level of the UE of first class is obtained as the third level. The first level of the UE of first class may be represented as A_good; the second level of the UE of first class may be represented as A_middle; and the third level of the UE of first class may be represented as A_bad.

At step S260, according to the first system frame information and the second system frame information of the UE of second class, a classification level of the UE of second class is determined.

Comparison is performed between the first system frame information and the second system frame information of the UE of each class to determine a classification level of the UE of each class. For example, in the case that a UE is the UE of second class, the first system frame information and the second system frame information of the UE of second class are obtained, and the first system frame information and the second system frame information of the UE of second class are compared with each other to obtain the classification level of the UE of second class.

In an embodiment, the first system frame information includes first spectrum efficiency, and the second system frame information includes second spectrum efficiency. A classification level of the UE of second class being determined includes: determining, upon obtaining the first spectrum efficiency and the second spectrum efficiency of the UE of second class, a second equipment rating strategy of the UE of second class. Through the second equipment rating strategy, the classification level of the UE of second class is obtained based on the first spectrum efficiency and the second spectrum efficiency of the UE of second class.

As an example, according to the first spectrum efficiency and the second spectrum efficiency of the UE of second class, in the case that, for example, there are ten UEs of second class, the UEs are numbered as B1, B2 and so on. Their first spectrum efficiency are counted statistically as S1-B1, S1-B2, etc. and their second spectrum efficiency are as S2-B1, S2-B2, etc., and a second equipment rating strategy related to the first spectrum efficiency and the second spectrum efficiency of the UEs of second class is determined accordingly. For example, the obtained second equipment rating strategy is configured to compare the first spectrum efficiency with the second spectrum efficiency of the UE of second class, if the second spectrum efficiency is greater than the first spectrum efficiency, the classification level of the UE of second class is determined as a first level; if the second spectrum efficiency is equal to the first spectrum efficiency, the classification level of the UE of second class is determined as a second level; and if the second spectrum efficiency is less than the first spectrum efficiency, the classification level of the UE of second class is determined as a third level.

In an embodiment, a classification level of the UE of second class being obtained includes: obtaining, when the second spectrum efficiency of the UE of second class is less than the first spectrum efficiency, the classification level of the UE of second class as a third level; obtaining, when the second spectrum efficiency of the UE of second class is greater than the first spectrum efficiency by a third preset range, the classification level of the UE of second class as a second level; and obtaining, when the second spectrum efficiency of the UE of second class is greater than the first spectrum efficiency by a fourth preset range, the classification level of the UE of second class as a first level.

As an example, when the second spectrum efficiency of the UE of second class is less than the first spectrum efficiency, the classification level of the UE of second class is obtained as the third level; when the second spectrum efficiency of the UE of second class is greater than the first spectrum efficiency by the third preset range, the classification level of the UE of second class is obtained as the second level; and when the second spectrum efficiency of the UE of second class is greater than the first spectrum efficiency by the fourth preset range, the classification level of the UE of second class is obtained as the first level.

For example, upon obtaining the first spectrum efficiency S1 and the second spectrum efficiency S2 of the UE of second class, the first spectrum efficiency S1 and the second spectrum efficiency S2 are compared with each other. If S2 is greater than S1, and a gain therebetween is greater than 10%, then the classification level of the UE of second class is obtained as the first level; if S2 is greater than S1, and the gain therebetween is greater than 0 to 10%, then the classification level of the UE of second class is obtained as the second level; and if S2 is less than S1, then the classification level of the UE of second class is obtained as the third level. In this case, the first level of the UE of second class may be represented as C_good; the second level of the UE of second class may be represented as C_middle; and the third level of the UE of second class may be represented as C_bad.

At step S270, according to the reporting information and a preset punishment-level mechanism, the UE of first class and/or the UE of second class after obtaining their classification levels are reclassified, respectively.

Upon obtaining the classification level of the UE of first class or the classification level of the UE of second class, according to the reporting information and the preset punishment-level mechanism, the UE of first class and the UE of second class after obtaining their classification levels are reclassified, respectively. In this case, the reporting information includes MCS information, QAM information and/or CQI information. Through the QAM information, a modulation mode currently used in the UE and a first equipment classification strategy related to the currently used modulation mode of the UE are determined. The modulation mode is an uplink and downlink modulation mode, and the modulation mode of a current UE is determined by using a QAM parameter in the QAM information. For example, in the case that the QAM parameter is 16, the uplink and downlink modulation mode of the UE is 16QAM; or, in the case that the QAM parameter is 64, the uplink and downlink modulation mode of the UE is determined as 64QAM. Through the uplink and downlink modulation mode of the UE, a first equipment classification strategy related to the currently used uplink and downlink modulation mode of the UE is determined. Based on the first equipment classification strategy, a class of the UE is determined according to the MCS information and the CQI information in the reporting information.

In the case that the QAM parameter obtained is 64 or greater than 64, the uplink and downlink modulation mode of the UE is determined as 64QAM, i.e., a first modulation mode. Through the uplink and downlink modulation mode of 64QAM, a first equipment classification strategy related to the currently used uplink and downlink modulation mode of the UE is determined as: $Y = {MCS}_{max} \left({MCS}_{max}\div 4\right) + RI + log 2 \left(n\right) - 6 + m + r and CQI - \frac{CQI}{3} + S .$

According to the MCS information and the CQI information, a classification mode of the UE is determined. In this case, *MCS*ₘₐₓ represents the maximum value of configuration currently used in a network; MCS represents a scheduling value allocated to the UE by the network at a current moment; m and s are positive numbers, and are determined according to actual performance of the network; r is a punishment level to avoid frequent reallocation of DMRS resources to a UE with variable channel quality by a network side interface, which can be increased or reduced in a cumulative manner according to demand; a value range of n is 4, 16, 64, etc.; and RI represents the number of streams currently used in the UE.

Judgment regarding whether the MCS information is greater than a first preset threshold value and whether the CQI information is greater than a second preset value are performed. If the MCS information is greater than the first preset threshold value and the CQI information is greater than the second preset value, the UE is determined as a first class; and if the MCS information is less than or equal to the first preset threshold value and the CQI information is less than or equal to the second preset threshold value, the UE is determined as a third class. For example, in the case that it is obtained that *MCS*ₘₐₓ is 28, m is 1, s is 1, r is 2, and n is 64, the first preset threshold value Y obtained is 24+RI, and the second preset threshold value is $CQI - \frac{CQI}{3} + 1$ .

If it is obtained that the MCS parameter is greater than 24+RI and the CQI parameter is greater than $CQI - \frac{CQI}{3} + 1$,
then the UE is determined as the first class, such as a UE of class A; and
if it is obtained that the MCS parameter is less than or equal to 24+RI and the CQI parameter is less than or equal to $CQI - \frac{CQI}{3} + 1$,
then the UE is determined as the third class, such as a UE of class B.

In the case that the QAM parameter obtained is 16 or less than 16, the uplink and downlink modulation mode of the UE is determined as 16QAM, i.e., a second modulation mode. Through the uplink and downlink modulation mode of 16QAM, a first equipment classification strategy related to the currently used uplink and downlink modulation mode of the UE is determined as: $Y = \left({MCS}_{max}\div 4\right) + \left({RI}_{max}-RI\right) - log 2 \left(n\right) + 6 + m - r and \frac{CQI}{3} - S .$

According to the MCS information and the CQI information, the classification mode of the UE is determined. In this case, *MCS*ₘₐₓ represents the maximum value of configuration currently used in a network; MCS represents a scheduling value allocated to the UE by the network at a current moment; m and s are positive numbers, and are determined according to actual performance of the network; r is the punishment level to avoid frequent reallocation of DMRS resources to UE with variable channel quality by a network side interface, which can be increased or reduced in a cumulative manner according to demand; a value range of n is 4, 16, 64, etc.; RI represents the number of streams currently used in the UE; and *RI*ₘₐₓ represents the maximum number of streams supported by the network and the UE.

Judgment regarding whether the MCS information is less than a third preset threshold value and whether the CQI information is greater than a fourth preset threshold value are performed. If the MCS information is less than the third preset threshold value and the CQI information is less than the fourth preset threshold value, the UE is determined as a second class; and if the MCS information is greater than or equal to the third preset threshold value and the CQI information is greater than or equal to the fourth preset threshold value, then the UE is determined as a third class. For example, in the case that it is obtained that *MCS*ₘₐₓ is 28, *RI*ₘₐₓ is 4, m is 1, s is 1, r is 2, and n is 64, it is obtained that the first preset threshold value Y is 10-RI, and the second preset threshold value is $\frac{CQI}{3} - 1$.

If it is obtained that the MCS parameter is less than 10-RI and the CQI parameter is less than $\frac{CQI}{3} - 1$,
then the UE is determined as the second class, such as a UE of class C; and
if it is obtained that the MCS parameter is greater than or equal to 10-RI and the CQI parameter is greater than or equal to $\frac{CQI}{3} - 1$,
then the UE is determined as the third class, such as a UE of class B.

At step S280, if the classification level of the UE of first class is of a first level after reclassification, DMRS information for dynamically adjusting the UE of first class is obtained according to the newly added or expended DCI field.

If the classification level of the UE of first class is of the second level, time domain resource and/or frequency domain resource subjected to dynamic adjustment of the UE of first class is obtained. By connecting a user of the UE of first class, the time domain resource and/or the frequency domain resource subjected to dynamic adjustment of the UE of first class is used as re-allocation information, and the currently used DMRS of the UE of first class is re-allocated with the time domain resource and/or the frequency domain resource subjected to dynamic adjustment.

In an embodiment, the DMRS information of the UE of first class includes a decrease in time domain resource information and/or spectrum resource information. The re-allocating a DMRS of the UE of first class by using DMRS information of the UE of first class includes: reconnecting to the UE of first class according to a preset RPC signaling, and issuing to the UE of first class a decrease in time domain resource information and/or frequency domain resource information to re-allocate the DMRS of the UE of first class.

As an example, if the classification level of the UE of first class is of the second level, time domain resource and/or frequency domain resource subjected to dynamic adjustment of the UE of first class is obtained. A preset RPC signaling is issued to the UE of first class, the preset RPC signaling containing the time domain resource and/or the frequency domain resource subjected to dynamic adjustment. The UE of first class receives the preset RPC signaling, performs reconnection based on a reconnection instruction in the RPC signaling, and re-allocates the DMRS currently used in the UE of first class based on the time domain resource and/or the frequency domain resource subjected to dynamic adjustment in the RPC signaling. As such, time domain resource and/or frequency domain resource in the UE of first class is consistent with the time domain resource and/or the frequency domain resource subjected to dynamic adjustment. After the DMRS in the UE of first class is re-allocated, a successful re-allocation message is sent.

At step S290, if the classification level of the UE of second class is of a second level or a third level after reclassification, DMRS information for dynamically adjusting the UE of second class is obtained according to the newly added or expended DCI field.

If the classification level of the UE of second class is of the first level, time domain resource and/or frequency domain resource subjected to dynamic adjustment of the UE of second class is obtained. By connecting a user of the UE of second class, the time domain resource and/or the frequency domain resource subjected to dynamic adjustment of the UE of second class is used as re-allocation information, and the currently used DMRS of the UE of second class is re-allocated with the time domain resource and/or the frequency domain resource subjected to dynamic adjustment.

In an embodiment, the DMRS information of the UE of second class includes an increase in time domain resource information and/or spectrum resource information. The re-allocating a DMRS of the UE of second class by using DMRS information of the UE of second class includes: reconnecting to the UE of second class according to a preset RPC signaling, and issuing to the UE of second class an increase in time domain resource information and/or frequency domain resource information to re-allocate the DMRS of the UE of second class.

As an example, if the classification level of the UE of second class is of the second level, time domain resource and/or the frequency domain resource subjected to dynamic adjustment of the UE of second class is obtained. A preset RPC signaling is issued to the UE of second class, the preset RPC signaling containing the time domain resource and/or the frequency domain resource subjected to dynamic adjustment. The UE of second class receives the preset RPC signaling, performs reconnection based on a reconnection instruction in the RPC signaling, and re-allocates the DMRS currently used in the UE of second class based on the time domain resource and/or the frequency domain resource subjected to dynamic adjustment in the RPC signaling. As such, time domain resource and/or frequency domain resource in the UE of second class is consistent with the time domain resource and/or the frequency domain resource subjected to dynamic adjustment. After the DMRS in the UE of second class is re-allocated, a successful re-allocation message is sent.

In the present embodiment, the classification information of the UE is obtained through the reporting information of the UE, and the DMRS information for dynamically adjusting the UE of first class and/or the UE of second class is obtained according to the DCI field and the classification information, and the classification level of the UE of first class and/or the classification level of the UE of second class is determined. In the case that the classification level of the UE of first class is of the second level and/or the classification level of the UE of second class is of the first level, the DMRS is re-allocated. In this way, the UE with a poor or good demodulation ability or the UE located near or far from the base station can be determined to improve the spectrum efficiency of the NR cell.

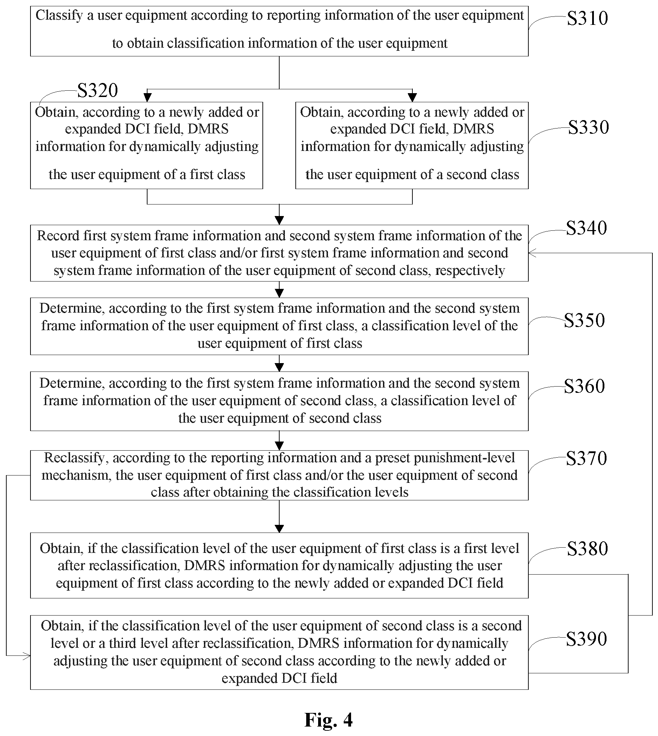

Referring to Fig. 4, Fig. 4 is a schematic flow diagram of another DMRS allocating method provided by an embodiment of the present disclosure.

As shown in Fig. 4, provided in the embodiment is a DMRS allocating method, which includes the following steps S310 to S390.

At step S310, a UE is classified according to reporting information of the UE to obtain classification information of the UE.

As an example, as shown in Fig. 2, the reporting information sent by an online UE is received, and the UE is classified according to the reporting information of the UE, there being at least one UE; and the reporting information includes modulation and coding scheme (MCS), block error rate (Bler), channel quality indicator (CQI), quadrature amplitude modulation (QAM), etc. Through the reporting information, the UE is classified according to a preset classification mode to obtain classification information of the UE. In this case, if there are a plurality of UEs, the classification information of each of the UEs is obtained, which includes a class and a classification level, the class including a first class, a second class and a third class.

At step S320, DMRS information for dynamically adjusting the UE of first class is obtained according to a newly added or expended DCI field.

By adding a field to DCI or expanding fields of DCI, four fields are newly added beyond the bits of the DCI, or four fields are expended beyond the bits of the DCI. For example, the first two fields represent an increase in time domain resource, i.e. an increase of the maximum length. 00 represents no increase in the time domain resource, 01 represents that the time domain resource increases by one OFDM symbol, 11 represents that the time domain resource increases by three OFDM symbols, etc. The last two fields represent an increase or decrease in frequency domain resource, i.e., an increase of a value K in the frequency domain resource. 00 represents K/2, 01 represents K/4, 10 represents 2K, 11 represents 4K, etc. By obtaining the classification information of the UE, decreasing of the time domain resource or frequency domain resource is determined while it is based on the newly added DCI fields or the expended DCI fields.

For example, in the case that the UE is of the first class, based on the newly added DCI fields, the expended DCI fields, or a decrease of the frequency domain resource after dynamic adjustment, for example, the current frequency domain resource of the UE of first class being K and the last two fields of the added DCI fields or the expended DCI fields being 00, it is obtained that a decrease of the frequency domain resource of the UE of first class after dynamic adjustment is K/2. In the case that it is the UE of third class, there is no handle to be performed.

At step S330, DMRS information for dynamically adjusting the UE of second class is obtained according to a newly added or expended DCI field.

By adding a field to DCI or extending fields of DCI, four fields are newly added beyond the bits of the DCI, or four fields are expended beyond the bits of the DCI. For example, the first two fields represent an increase in the time domain resource, i.e. an increase of the maximum length. 00 represents no increase in the time domain resource, 01 represents that the time domain resource increases by one OFDM symbol, 11 represents that the time domain resource increases by three OFDM symbols, etc. The last two fields represent an increase or decrease in the frequency domain resource, i.e., an increase of a value K in the frequency domain resource. 00 represents K/2, 01 represents K/4, 10 represents 2K, 11 represents 4K, etc. By obtaining the classification information of the UE, increasing of the time domain resource or the frequency domain resource is determined while it is based on the newly added DCI fields or the expended DCI fields.

For example, in the case that the currently used frequency domain resource of the UE of second class is K, the first two fields of the newly added DCI fields or the expended DCI fields are 01 and the last two fields are 10, it is obtained that the an increase of the frequency domain resource of the UE of first class after dynamic adjustment is 2K and/or an increase of the time domain resource is one OFDM symbol. In the case that the UE is of the third class, no handle is performed on the UE of third class.

At step S340, first system frame information and second system frame information of the UE of first class, and/or first system frame information and second system frame information of the UE of second class are recorded, respectively.

As an example, the moment at which the reporting information of the UE is received is determined and serves as a first moment. Upon the classification information of the UE is obtained, the first system frame information of the UE is counted statistically. For example, there are 30 UEs, in which ten are the UEs of first class, ten are the UEs of second class, and ten are the UEs of third class. Ten pieces of first system frame information of the UEs of each class are recorded, respectively. Then, ten pieces of system frame information of the UEs of the each class are statistically counted, respectively, and the current moment is determined as a second moment. From the second moment, the second system frame information of the UEs of each class is statistically counted, respectively.

At step S350, according to the first system frame information and the second system frame information of the UE of first class, a classification level of the UE of first class is determined.

Comparison is performed between the first system frame information and the second system frame information of the UE of each class to determine a classification level of the UE of each class. For example, in the case that the UE is the UE of first class, the first system frame information and the second system frame information of the UE of first class are obtained, and the first system frame information and the second system frame information of the UE of first class are compared with each other to obtain the classification level of the UE of first class.

In an embodiment, the first system frame information includes first spectrum efficiency, and the second system frame information includes second spectrum efficiency. A classification level of the UE of first class being determined includes: determining, according to the first spectrum efficiency and the second spectrum efficiency of the UE of first class, a first equipment rating strategy related to the first spectrum efficiency and the second spectrum efficiency of the UE of first class; and obtaining, based on the first equipment rating strategy as well as the first spectrum efficiency and the second spectrum efficiency of the UE of first class, the classification level of the UE of first class.

As an example, the first system frame information includes first spectrum efficiency, and the second system frame information includes second spectrum efficiency. In this case, it is counted statistically that there are at least one piece of first system frame information and at least one piece of second system frame information. Upon the first spectrum efficiency and the second spectrum efficiency of the UE of first class are obtained, in the case that, for example, there are ten UEs of first class, the UEs are numbered as A1, A2, etc. Their first spectrum efficiency are counted statistically as S1-A1, S1-A2, etc. and their first spectrum efficiency are counted statistically as S2-A1, S2-A2, etc., and a first equipment rating strategy of the UE of first class is determined accordingly. Through the first equipment rating strategy, a classification level of the UE of first class is obtained based on the first spectrum efficiency and the second spectrum efficiency of the UE of first class. For example, the first equipment rating strategy obtained is configured to compare the first spectrum efficiency with the second spectrum efficiency of the UE of first class, if the second spectrum efficiency is greater than the first spectrum efficiency, the classification level of the UE of first class is determined as a first level; if the second spectrum efficiency is equal to the first spectrum efficiency, the classification level of the UE of first class is determined as a second level; and if the second spectrum efficiency is less than the first spectrum efficiency, the classification level of the UE of first class is determined as a third level.

In an embodiment, obtaining the classification level of the UE of first class includes: obtaining, if the second spectrum efficiency of the UE of first class is greater than the first spectrum efficiency by a first preset range, the classification level of the UE of first class as a first level; and obtaining, if the second spectrum efficiency of the UE of first class is greater than the first spectrum efficiency by a second preset range, the classification level of the UE of first class as a second level.

If the second spectrum efficiency of the UE of first class is greater than the first spectrum efficiency by a value within the first preset range, then the classification level of the UE of first class is obtained as the first class; if the second spectrum efficiency of the UE of first class is greater than the first spectrum efficiency by a value within the second preset range, then the classification level of the UE of first class is obtained as the second class; and if the second spectrum efficiency of the UE of first class is less than the first spectrum efficiency, then the classification level of the UE of first class is obtained as the third class.

For example, upon obtaining the first spectrum efficiency S1 and the second spectrum efficiency S2 of the UE of first class, the first spectrum efficiency S1 and the second spectrum efficiency S2 are compared with each other. If S2 is greater than S1, and a gain therebetween is greater than 5%, the classification level of the UE of first class is obtained as the first level; if S2 is greater than S1, and the gain therebetween is greater than 0 to 5%, the classification level of the UE of first class is obtained as the second level; and if S2 is less than S1, then the classification level of the UE of first class is obtained as the third level. The first level of the UE of first class may be represented as A_good; the second level of the UE of first class may be represented as A_middle; and the third level of the UE of first class may be represented as A_bad.

At step S360, according to the first system frame information and the second system frame information of the UE of second class, a classification level of the UE of second class is determined.

Comparison is performed between the first system frame information and the second system frame information of the UE of each class to determine a classification level of the UE of each class. For example, in the case that a UE is the UE of second class, the first system frame information and the second system frame information of the UE of second class are obtained, and the first system frame information and the second system frame information of the UE of second class are compared with each other to obtain the classification level of the UE of second class.

In an embodiment, the first system frame information includes first spectrum efficiency, and the second system frame information includes second spectrum efficiency. A classification level of the UE of second class being determined includes: determining, upon obtaining the first spectrum efficiency and the second spectrum efficiency of the UE of second class, a second equipment rating strategy of the UE of second class. Through the second equipment rating strategy, the classification level of the UE of second class is obtained based on the first spectrum efficiency and the second spectrum efficiency of the UE of second class.

As an example, according to the first spectrum efficiency and the second spectrum efficiency of the UE of second class, in the case that, for example, there are ten UEs of second class, the UEs are numbered as B1, B2, etc. Their first spectrum efficiency are counted statistically as S1-B1, S1-B2, etc. and their second spectrum efficiency are counted statistically as S2-B1, S2-B2, etc., and a second equipment rating strategy related to the first spectrum efficiency and the second spectrum efficiency of the UE of second class is determined accordingly; and based on the second equipment rating strategy as well as the first spectrum efficiency and the second spectrum efficiency of the UE of second class, the classification level of the UE of second class is obtained.

For example, the second equipment rating strategy obtained is configured to compare the first spectrum efficiency with the second spectrum efficiency of the UE of second class, If the second spectrum efficiency is greater than the first spectrum efficiency, the classification level of the UE of second class is determined as a first level; if the second spectrum efficiency is equal to the first spectrum efficiency, the classification level of the UE of second class is determined as a second level; and if the second spectrum efficiency is less than the first spectrum efficiency, then the classification level of the UE of second class is determined as a third level.

In an embodiment, a classification level of the UE of second class being obtained includes: obtaining, when the second spectrum efficiency of the UE of second class is less than the first spectrum efficiency, the classification level of the UE of second class as a third level; obtaining, when the second spectrum efficiency of the UE of second class is greater than the first spectrum efficiency by a third preset range, the classification level of the UE of second class as a second level; and obtaining, when the second spectrum efficiency of the UE of second class is greater than the first spectrum efficiency by a fourth preset range, the classification level of the UE of second class as a first level.

As an example, when the second spectrum efficiency of the UE of second class is less than the first spectrum efficiency, the classification level of the UE of second class is obtained as the third level; when the second spectrum efficiency of the UE of second class is greater than the first spectrum efficiency by the third preset range, the classification level of the UE of second class is obtained as the second level; and when the second spectrum efficiency of the UE of second class is greater than the first spectrum efficiency by the fourth preset range, the classification level of the UE of second class is obtained as the first level.

For example, upon obtaining the first spectrum efficiency S1 and the second spectrum efficiency S2 of the UE of second class are obtained, the first spectrum efficiency S1 and the second spectrum efficiency S2 are compared with each other. If S2 is greater than S1, and a gain therebetween is greater than 10%, then the classification level of the UE of second class is obtained as the first level; if S2 is greater than S1, and the gain therebetween is greater than 0 to 10%, the classification level of the UE of second class is obtained as the second level; and if S2 is less than S1, then the classification level of the UE of second class is obtained as the third level. In this case, the first level of the UE of second class may be represented as C_good; the second level of the UE of second class may be represented as C_middle; and the third level of the UE of second class may be represented as C_bad.

At step S370, according to the reporting information and a preset punishment-level mechanism, the UE of first class and/or the UE of second class after obtaining their classification levels are reclassified, respectively.

Upon obtaining the classification level of the UE of first class or the classification level of the UE of second class, according to the reporting information and the preset punishment-level mechanism, the UE of first class and the UE of second class after obtaining their classification levels are reclassified, respectively. In this case, the reporting information includes MCS information, QAM information and/or CQI information. Through the QAM information, a currently used modulation mode of the UE and a first equipment classification strategy related to the currently used modulation mode of the UE are determined. The modulation mode is an uplink and downlink modulation mode, and the modulation mode of a current UE is determined by using a QAM parameter in the QAM information. For example, in the case that the QAM parameter is 16, the uplink and downlink modulation mode of the UE is 16QAM; or, in the case that the QAM parameter is 64, the uplink and downlink modulation mode of the UE is determined as 64QAM. Through the uplink and downlink modulation mode of the UE, a first equipment classification strategy related to the current uplink and downlink modulation mode of the UE is determined. Based on the first equipment classification strategy, a class of the UE is determined according to the MCS information and the CQI information in the reporting information.

In the case that the QAM parameter obtained is 64 or greater than 64, the uplink and downlink modulation mode of the UE is determined as 64QAM, i.e., a first modulation mode. Through the uplink and downlink modulation mode of 64QAM, a first equipment classification strategy related to the currently used uplink and downlink modulation mode of the UE is determined as: $Y = {MCS}_{max} \left({MCS}_{max}\div 4\right) + RI + log 2 \left(n\right) - 6 + m + r and CQI = \frac{CQI}{3} + S .$

According to the MCS information and the CQI information, a classification mode of the UE is determined. In this case, *MCS*ₘₐₓ represents the maximum value of configuration currently used in a network; MCS represents a scheduling value allocated to the UE by the network at a current moment; m and s are positive numbers, and are determined according to actual performance of the network; r is a punishment level to avoid frequent reallocation of DMRS resources to a UE with variable channel quality by a network side interface, which can be increased or reduced in a cumulative manner according to demand; a value range of n is 4, 16, 64, etc.; and RI represents the number of streams currently used in the UE.

Judgment regarding whether the MCS information is greater than a first preset threshold value and whether the CQI information is greater than a second preset value are performed. If the MCS information is greater than the first preset threshold value and the CQI information is greater than the second preset value, then the UE is determined as a first class; and if the MCS information is less than or equal to the first preset threshold value and the CQI information is less than or equal to the second preset threshold value, the UE is determined as a third class. For example, in the case that it is obtained that *MCS*ₘₐₓ is 28, m is 1, s is 1, r is 2, and n is 64, the first preset threshold value Y obtained is 24+RI, and the second preset threshold value is $CQI - \frac{CQI}{3} + 1$ .

If it is obtained that the MCS parameter is greater than 24+RI and the CQI parameter is greater than $CQI - \frac{CQI}{3} + 1$,
then the UE is determined as the first class, such as a UE of class A; and
if it is obtained that the MCS parameter is less than or equal to 24+RI and the CQI parameter is less than or equal to $CQI - \frac{CQI}{3} + 1$,
then the UE is determined as the third class, such as a UE of class B.

In the case that the QAM parameter obtained is 16 or less than 16, the uplink and downlink modulation mode of the UE is determined as 16QAM, i.e., a second modulation mode. Through the uplink and downlink modulation mode of 16QAM, a first equipment classification strategy related to the currently used uplink and downlink modulation mode of the UE is determined as: $Y = \left({MCS}_{max}\div 4\right) + \left({RI}_{max}-RI\right) - log 2 \left(n\right) + 6 + m - r and \frac{CQI}{3} - S .$

According to the MSC information and the CQI information, the classification mode of the UE is determined. In this case, *MCS*ₘₐₓ represents the maximum value of configuration currently used in a network; MCS represents a scheduling value allocated to the UE by the network at a current moment; m and s are positive numbers, and are determined according to actual performance of the network; r is a punishment level to avoid frequent reallocation of DMRS resources to a UE with variable channel quality by a network side interface, which can be increased or reduced in a cumulative manner according to demand; a value range of n is 4, 16, 64, etc.; RI represents the number of streams currently used in the UE; and *RI*ₘₐₓ represents the maximum number of streams supported by the network and the UE.

Judgment regarding whether the MSC information is less than a third preset threshold value and whether the CQI information is greater than a fourth preset threshold value are performed. If the MSC information is less than the third preset threshold value and the CQI information is less than the fourth preset threshold value, then the UE is determined as a second class; and if the MSC information is greater than or equal to the third preset threshold value and the CQI information is greater than or equal to the fourth preset threshold value, then the UE is determined as a third class. For example, in the case that it is obtained that *MCS*ₘₐₓ is 28, *RI*ₘₐₓ is 4, m is 1, s is 1, r is 2, and n is 64, it is obtained that the first preset threshold value Y is 10-RI, and the second preset threshold value is $\frac{CQI}{3} - 1$.

If it is obtained that the MCS parameter is less than 10-RI and the CQI parameter is less than $\frac{CQI}{3} - 1$,
then the UE is determined as the second class, such as a UE of class C; and
if it is obtained that the MCS parameter is greater than or equal to 10-RI and the CQI parameter is greater than or equal to $\frac{CQI}{3} - 1$,
then the UE is determined as the third class, such as a UE of class B.

At step S380, if the classification level of the UE of first class is of a first level after reclassification, DMRS information for dynamically adjusting the UE of first class is obtained according to the newly added or expended DCI field.

After reclassification, it is determined whether the classification level of the UE of first class has changed or not. If the classification level of the UE of first class is of the first level, based on the newly added DCI fields, the expended DCI fields, or a decrease of frequency domain resource after dynamic adjustment, for example, currently used frequency domain resource of the UE of first class being K and the last two fields of the newly added DCI fields or the expended DCI fields being 00, then it is obtained that a decrease of the frequency domain resource of the UE of first class after dynamic adjustment is K/2. In the case that the classification level of the UE of first class is of the third level, no handle is performed.

At step S390, if the classification level of the UE of second class is of a second level or a third level after reclassification, DMRS information for dynamically adjusting the UE of second class is obtained according to the newly added or expended DCI field.

In the embodiment, after reclassification, it is determined whether the classification level of the UE of second class has changed or not. If the classification level of the UE of second class is of the second level or the third level, or alternatively upon the classification level of the UE of second class is of the second level or the third level, based on the newly added DCI fields, the expended DCI fields, or an increase of frequency domain resource after dynamic adjustment, for example, the currently used frequency domain resource of the UE of second class being K, the first two fields of the newly added DCI fields or the expended DCI fields being 01 and the last two fields being 10, then it is obtained that an increase of frequency domain resource of the UE of first class after dynamic adjustment is 2K and/or an increase of time domain resource is one OFDM symbol.

In the embodiment of the present disclosure, the classification information of the UE is obtained through the reporting information of the UE. According to the DCI fields and the classification information of the UE, DMRS information for the UE of first class is dynamically reduced, and/or the DMRS information for the UE of second class is dynamically increased. The classification levels of the UE of first class and/or the UE of second class are determined, and the UEs whose classification levels are determined are reclassified to avoid changes due to relative positions between the UEs and the base station. In the case that the classification level of the UE of first class is of the first level, the DMRS information is dynamically reduced again, and/or in the case that the classification level of the UE of second class is of the second level or the third level, the DMRS information is dynamically increased again, thereby improving scheduling flexibility of the NR cell.

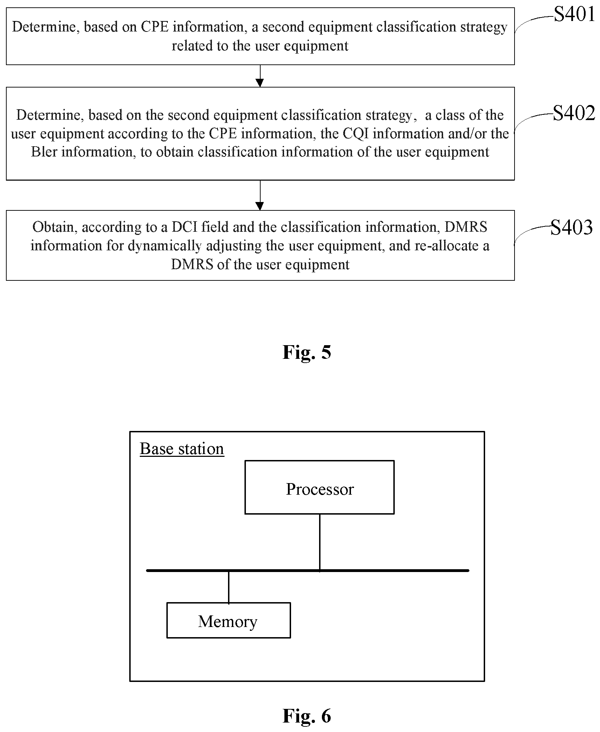

Referring to Fig. 5, Fig. 5 is a schematic flow diagram of another DMRS allocating method provided by an embodiment of the present disclosure.

As shown in Fig. 5, provided in the present embodiment is a DMRS allocating method, which includes the following steps S401 to S403.

At step S401, a second equipment classification strategy related to a UE is determined based on CPE information.

As an example, as shown in Fig. 2, reporting information sent by an online UE is received, and the UE is classified according to the reporting information of the UE, there being at least one UE; and the reporting information includes online information (i.e., customer premise equipment, CPE), block error rate (Bler), channel quality indicator (CQI), etc. A second equipment classification strategy related to the UE is determined by means of CPEs. For example, in the case that the number of CPEs of a user is greater than ten, the user with Bler less than CQI and CQI less than 10 can be a user of first class; or, in the case that the number of CPEs is less than 10, the CPEs are UEs of second class.

At step S402, based on the second equipment classification strategy, a class of a UE is determined according to the CPE information, the CQI information and/or the Bler information to obtain classification information of the UE.

Upon determining the second equipment classification strategy, a class of a UE is determined according to the CPE information, the CQI information and/or the Bler information. For example, the class of the UE is determined according to the CPE information; the class of the UE is determined according to the CQI information; the class of the UE is determined according to the Bler information; the class of the UE is determined according to the CPE information and the CQI information, etc. so that the classification information of the UE can be obtained.

In an embodiment, the CPE information includes RI information and MSC information. Upon determining the second equipment classification strategy, a class of a UE being determined according to the CPE information, the CQI information and/or the Bler information includes: determining, if the RI information is greater than or equal to a fifth preset threshold value, the Bler information is less than or equal to a fifth preset range and the CQI information is of a sixth preset threshold value, the UE as a first class; and determining, if the MSC information is less than a seventh preset threshold value, the UE as a second class.

As an example, the CPE information includes RI information and MCS information, the RI information being user traffic information, MCS information being modulation and coding scheme information. If the RI information is greater than or equal to a fifth preset threshold value, the Bler information is less than or equal to a fifth preset range and the CQI information is of a sixth preset threshold value, then a class of the UE is determined as a first class. For example, in the case that the RI information is greater than or equal to 4, the Bler parameter is less than or equal to 5%, and the CQI parameter is 15, then the UE is determined as a UE of first class, such as a UE of class A; or alternatively, in the case that the RI information is less than 4, the Bler parameter is less than or equal to 5%, and the CQI parameter is 15, then the UE is determined as a UE of third class, such as a UE of class B; or alternatively, in the case that the RI information is less than 4, the Bler parameter is greater than 5%, and the CQI parameter is 15, then the UE is determined as a UE of third class, such as a UE of class B. If the MCS information is less than a seventh preset threshold value, then the UE is determined as the second class. For example, in the case that the MCS parameter is less than 10, the UE is determined as the second class, such as the UE of class C; or, in the case that the MCS parameter is greater than or equal to 10, the UE is determined as the third class, such as the UE of class B.

At step S403, DMRS information for dynamically adjusting the UE is obtained according to a DCI field and the classification information, and a DMRS of the UE is re-allocated.

As an example, the network side interface obtains the classification information of the UE, and thereby obtains DMRS information for dynamically adjusting the UE according to the DCI field and the classification information of the UE. According to definition of DCI format, fields are newly added or expended beyond the bits of the related DCI format for uplink service or downlink service, respectively. Time domain and/or frequency domain resource in the DCI fields is determined according to the classification information of the UE, thereby obtaining the DMRS information for dynamically adjusting the UE. Based on the classification information of the UE and the time domain and/or frequency domain resource related to the classification information, a DMRS of the UE is re-allocated.

In the present embodiment, when positions of UEs relative to the base station are the same, the UEs are classified by using the reporting information of the UEs to obtain the classification information of the UEs. According to the DCI fields and the information of the UEs, DMRS information for dynamically adjusting the UEs are obtained, and the DMRS information are used as DMRSs for re-allocation of the UEs, which not only effectively improves the spectrum efficiency of the NR cell, but also improves user experience degree.

Referring to Fig. 6, Fig. 6 is a schematic block diagram of a structure of a base station provided by an embodiment of the present disclosure.

As an example, the base station further includes a processor and a memory. The memory is configured to store a computer program.

The processor is configured to execute the computer program and implement, while executing the computer program, the DMRS allocating methods as mentioned above and provided by the embodiments of the present disclosure.

It should be understood that, the processor may be a central processing unit (CPU), and may also be other general-purpose processors, a digital signal processor (DSP), an application specific integrated circuit (ASIC), a field-programmable gate array (FPGA) or other programmable logic devices, discrete gates or transistor logic devices, discrete hardware components, etc. The general-purpose processors may be microprocessors, or they may be any conventional processors, etc.

An embodiment of the present disclosure further provides a computer readable storage medium. The computer readable storage medium stores a computer program which, when executed by a processor, enables the processor to implement any one of the DMRS allocating methods provided by the embodiments of the present disclosure.

A person of ordinary skill in the art may understand that, all or some steps of the methods disclosed above and functional modules/units of a system or an apparatus may be implemented as software, firmware, hardware, and a proper combination thereof. In an implementation of the hardware, a division of the functional modules/units mentioned above does not necessarily correspond to a division of physical components. For example, one physical component may have multiple functions, or one function or step may be implemented by multiple physical components cooperatively. Some physical components or all physical components may be implemented as software executed by a processor, such as a central processor, a digital signal processor or a microprocessor, or may be implemented as hardware, or may be implemented as an integrated circuit, such as an application-specific integrated circuit. Such software may be distributed on a computer readable storage medium, and the computer readable storage medium may include a computer readable storage medium (or non-transient medium) and a communications medium (or transient medium).

As is known to a person of ordinary skill in the art, the term of computer readable storage medium includes volatile and non-volatile, removable and non-removable mediums that may be implemented in any method or technology for storing information (such as a computer readable instruction, a data structure, and a program module or other data). The computer readable storage medium includes, but is not limited to, an RAM, an ROM, an EEPROM, a flash memory or other memory technology, a CD-ROM, a digital video disk (DVD) or other optical disk storage, a magnetic cassette, a magnetic tape, a magnetic disk storage or other magnetic storage apparatus, or any other medium which can be used to store the desired information and which can be accessed by a computer. In addition, as is known to a person of ordinary skill in the art, the communications medium usually includes the computer readable instruction, the data structure, and the program module or other data in a modulated data signal, such as a carrier or other transmission mechanisms, and can include any information delivery medium.

As an example, the computer readable storage medium may be an internal storage unit of the electronic equipment described in the foregoing embodiments, such as a hard disk or a memory of the electronic device. The computer readable storage medium may also be an external storage equipment of the electronic equipment, such as a plug-in hard disk on the electronic equipment, a smart media card (SMC), a secure digital (SD) card, a flash card, etc.

As for the electronic equipment and the computer readable storage medium provided by the foregoing embodiments, by classifying the UE according to reporting information of a UE, the classification information of the UE is obtained; and according to a DCI field and the classification information, DMRS information for dynamically adjusting the UE is obtained, and a DMRS of the UE is re-allocated. The technical solution achieves dynamic adjustment by means of the DCI field and the classification information of the UE and re-allocates the DMRS of the UE, thereby effectively improving the spectrum efficiency of the NR Cell.

## Claims

1. A demodulation reference signal, DMRS, allocating method, the method is performed by a New Radio, NR, base station, and the method comprises:
receiving reporting information from a user equipment, UE;
classifying the UE according to the reporting information of the UE to obtain classification information of the UE (S110), wherein the classification information includes a class and a classification level;
obtaining, according to a downlink control information, DCI, field and the classification information, DMRS information for dynamically adjusting time domain resources and/or frequency domain resources of the UE, and re-allocating a DMRS of the UE according to the DMRS information (S120);
**characterized in that**:
the classification information comprises a first class and/or a second class, and obtaining, according to the DCI field and the classification information, the DMRS information for dynamically adjusting the time domain resources and/or frequency domain resources of the UE comprises:
obtaining, according to a newly added or extended DCI field, DMRS information for dynamically adjusting time domain resources and/or frequency domain resources of a UE of first class (S220); and/or,
obtaining, according to a newly added or extended DCI field, DMRS information for dynamically adjusting time domain resources and/or frequency domain resources of a UE of second class (S230); and
before re-allocating the DMRS of the UE according to the DMRS information, the method further comprises:
recording first system frame information and second system frame information of the UE of first class, and/or first system frame information and second system frame information of the UE of second class, respectively (S240);
determining, according to the first system frame information and the second system frame information of the UE of first class, a classification level of the UE of first class (S250);
determining, according to the first system frame information and the second system frame information of the UE of second class, a classification level of the UE of second class (S260); and
reclassifying, according to the reporting information and a preset punishment-level mechanism, the UE of first class and/or the UE of second class after obtaining the classification levels (S270).

2. The DMRS allocating method according to claim 1, wherein the reporting information comprises modulation and coding scheme, MCS, information, quadrature amplitude modulation, QAM, information and/or channel quality indicator, CQI, information; and classifying a UE according to reporting information of the UE comprises:
determining, based on the QAM information, a modulation mode currently used in the UE and a first equipment classification strategy related to the currently used modulation mode of the UE; and
determining, based on the first equipment classification strategy, a class of the UE according to the MCS information and the CQI information.

3. The DMRS allocating method according to claim 2, wherein determining, based on the first equipment classification strategy, a class of the UE according to the MCS information and the CQI information comprises:
determining, if the modulation mode is a first preset modulation mode, whether the MCS information is greater than a first preset threshold value and whether the CQI information is greater than a second preset threshold value; and
determining, if the MCS information is greater than the first preset threshold value and the CQI information is greater than the second preset threshold value, the UE as a first class; and/or,
determining, if the modulation mode is a second preset modulation mode, whether the MCS information is less than a third preset threshold value and whether the CQI information is less than a fourth preset threshold value; and
determining, if the MCS information is less than the third preset threshold value and the CQI information is less than the fourth preset threshold value, the UE as a second class.

4. The DMRS allocating method according to claim 1, wherein the first system frame information comprises first spectrum efficiency, and the second system frame information comprises second spectrum efficiency;
determining a classification level of the UE of first class comprises:
determining, according to the first spectrum efficiency and the second spectrum efficiency of the UE of first class, a first equipment rating strategy related to the first spectrum efficiency and the second spectrum efficiency of the UE of first class; and
obtaining, based on the first equipment rating strategy and the first spectrum efficiency and the second spectrum efficiency of the UE of first class, the classification level of the UE of first class; and
determining a classification level of the UE of second class comprises:
determining, according to the first spectrum efficiency and the second spectrum efficiency of the UE of second class, a second equipment rating strategy related to the first spectrum efficiency and the second spectrum efficiency of the UE of second class; and
obtaining, based on the second equipment rating strategy and the first spectrum efficiency and the second spectrum efficiency of the UE of second class, the classification level of the UE of second class.

5. The DMRS allocating method according to claim 4, wherein
obtaining the classification level of the UE of first class comprises:
obtaining, if the second spectrum efficiency of the UE of first class is greater than the first spectrum efficiency by a first preset range, the classification level of the UE of first class as a first level; and
obtaining, if the second spectrum efficiency of the UE of first class is greater than the first spectrum efficiency by a second preset range, the classification level of the UE of first class as a second level; and
obtaining the classification level of the UE of second class comprises:
obtaining, when the second spectrum efficiency of the UE of second class is less than the first spectrum efficiency, the classification level of the UE of second class as a third level;
obtaining, when the second spectrum efficiency of the UE of second class is greater than the first spectrum efficiency by a third preset range, the classification level of the UE of second class as a second level; and
obtaining, when the second spectrum efficiency of the UE of second class is greater than the first spectrum efficiency by a fourth preset range, the classification level of the UE of second class as a first level.

6. The DMRS allocating method according to claim 5, wherein re-allocating the DMRS of the UE according to the DMRS information comprises:
re-allocating, if the classification level of the UE of first class is a second level after reclassification, a DMRS of the UE of first class through DMRS information of the UE of first class (S280); and/or,
re-allocating, if the classification level of the UE of second class is a first level after reclassification, a DMRS of the UE of second class through DMRS information of the UE of second class (S290).

7. The DMRS allocating method according to claim 6, wherein the DMRS information of the UE of first class comprises a decrease of time domain resource information and/or spectrum resource information, and re-allocating a DMRS of the UE of first class through DMRS information of the UE of first class comprises:
reconnecting to the UE of first class according to a preset RPC signaling, and issuing the decrease of time domain resource information and/or frequency domain resource information to the UE of first class to re-allocate the DMRS of the UE of first class.

8. The DMRS allocating method according to claim 6, wherein the DMRS information of the UE of second class comprises an increase of time domain resource information and spectrum resource information, and re-allocating a DMRS of the UE of second class through DMRS information of the UE of second class comprises:
reconnecting to the UE of second class according to a preset RPC signaling, and issuing the increase of time domain resource information and/or frequency domain resource information to the UE of second class to re-allocate the DMRS of the UE of second class.

9. The DMRS allocating method according to claim 1, wherein after reclassifying, according to the reporting information and a preset punishment-level mechanism, the UE of first class and/or the UE of second class after obtaining the classification levels, further comprises:
if the classification level of the UE of first class is a first level after reclassification, obtaining DMRS information for dynamically adjusting the UE of first class according to a newly added or extended DCI field (S380); and/or,
if the classification level of the UE of second class is a second class or a third class after reclassification, obtaining DMRS information for dynamically adjusting the UE of second class according to a newly added or extended DCI field (S390).

10. The DMRS allocating method according to claim 1, wherein the reporting information comprises customer premise equipment, CPE, information, CQI information and/or block error rate, Bler, information; and classifying a UE according to reporting information of the UE to obtain classification information of the UE comprises:
determining a second equipment classification strategy related to the UE based on the CPE information (S401); and
determining, based on the second equipment classification strategy, a class of the UE according to the CPE information, the CQI information and/or the Bler information to obtain classification information of the UE (S402).

11. The DMRS allocating method according to claim 10, wherein the CPE information comprises RI information and MCS information, and determining, based on the second equipment classification strategy, a class of the UE according to the CPE information, the CQI information and/or the Bler information to obtain classification information of the UE comprises:
determining, if the RI information is greater than or equal to a fifth preset threshold value, the Bler information is less than or equal to a fifth preset range and the CQI information is of a sixth preset threshold value, the UE as a first class; and
determining, if the MCS information is less than a seventh preset threshold value, the UE as a second class.

12. A New Radio, NR, base station, wherein the NR base station comprises a memory and a processor, the memory is configured to store a computer program comprising instructions which, when the computer program is executed by the processor, cause the processor to carry out the steps of the DMRS allocating method according to any one of claims 1 to 11.

13. A computer readable storage medium for computer readable storage, wherein the storage medium stores one or more programs, the one or more programs comprising instructions which, when the one or more programs are executed by a computer, cause the computer to carry out the steps of the DMRS allocating method according to any one of claims 1 to 11.

## Patentansprüche

1. Ein Demodulationsreferenzsignal, DMRS-Zuweisungsverfahren, welches von einer New Radio, NR-Basisstation durchgeführt wird, wobei das Verfahren umfasst:
Empfangen von Meldeinformationen von einem Benutzergerät, UE;
Klassifizieren des UE nach den Meldeinformationen des UE, um Klassifizierungsinformationen des UE zu erhalten (S110), wobei die Klassifizierungsinformationen eine Klasse und eine Klassifizierungsstufe beinhalten;
Erhalten von DMRS-Informationen zum dynamischen Anpassen von Zeitbereichsressourcen und/oder Frequenzbereichsressourcen des UE gemäß einem Downlink Control Information, DCI-Feld und den Klassifizierungsinformationen, und Neuzuweisen eines DMRS des UE gemäß den DMRS-Informationen (S120);
**dadurch gekennzeichnet, dass**:
die Klassifizierungsinformationen eine erste Klasse und/oder eine zweite Klasse umfassen, und Erhalten der DMRS-Informationen zum dynamischen Anpassen von Zeitbereichsressourcen und/oder Frequenzbereichsressourcen des UE gemäß dem DCI-Feld und den Klassifizierungsinformationen umfasst:
Erhalten von DMRS-Informationen zum dynamischen Anpassen von Zeitbereichsressourcen und/oder Frequenzbereichsressourcen eines UE der ersten Klasse gemäß einem neu hinzugefügten oder erweiterten DCI-Feld (S220); und/oder
Erhalten von DMRS-Informationen zum dynamischen Anpassen von Zeitbereichsressourcen und/oder Frequenzbereichsressourcen eines UE der zweiten Klasse gemäß einem neu hinzugefügten oder erweiterten DCI-Feld (S230); und
vor Neuzuweisen des DMRS des UE gemäß den DMRS-Informationen das Verfahren weiter umfasst:
Aufzeichnen von ersten Systemrahmen-Informationen und zweiten Systemrahmen-Informationen des UE der ersten Klasse und/oder ersten Systemrahmen-Informationen und zweiten Systemrahmen-Informationen des UE der zweiten Klasse (S240);
Bestimmen einer Klassifizierungsstufe des UE der ersten Klasse gemäß den ersten Systemrahmen-Informationen und den zweiten Systemrahmen-Informationen des UE der ersten Klasse (S250);
Bestimmen einer Klassifizierungsstufe des UE der zweiten Klasse gemäß den ersten Systemrahmen-Informationen und den zweiten Systemrahmen-Informationen des UE der zweiten Klasse (S260); und
Neuklassifizieren des UE der ersten Klasse und/oder der UE der zweiten Klasse gemäß den Meldeinformation und einem voreingestellten Strafstufenmechanismus nach Erhalten der Klassifizierungsstufen (S270).

2. Das DMRS-Zuweisungsverfahren nach Anspruch 1, wobei die Meldeinformationen Informationen zum Modulations- und Codierungsschema, MCS, Informationen zur Quadraturamplitudenmodulation, QAM und/oder Informationen zum Kanalqualitätsindikator, CQI, umfassen; und Klassifizieren eines UE gemäß den Meldeinformation des UE umfasst:
Bestimmen eines aktuell im UE verwendeten Modulationsmodus und einer ersten Geräteklassifizierungsstrategie, welche sich auf den aktuell verwendeten Modulationsmodus des UE bezieht, basierend auf den QAM-Informationen; und
Bestimmen einer Klasse des UE gemäß den MCS-Informationen und den CQI-Informationen basierend auf der ersten Geräteklassifizierungsstrategie.

3. Das DMRS-Zuweisungsverfahren nach Anspruch 2, wobei Bestimmen einer Klasse des UE gemäß den MCS-Informationen und den CQI-Informationen basierend auf der ersten Geräteklassifizierungsstrategie umfasst:
Bestimmen, falls der Modulationsmodus ein erster voreingestellter Modulationsmodus ist, ob die MCS-Informationen größer als ein erster voreingestellten Schwellenwert sind und ob die CQI-Informationen größer als ein zweiter voreingestellter Schwellenwert sind; und
Bestimmen, falls die MCS-Informationen größer als der erste voreingestellte Schwellenwert sind und die CQI-Informationen größer als der zweite voreingestellte Schwellenwert sind, des UE als eine erste Klasse; und/oder
Bestimmen, falls der Modulationsmodus ein zweiter voreingestellter Modulationsmodus ist, ob die MCS-Informationen kleiner als ein dritter voreingestellten Schwellenwert sind und ob die CQI-Informationen kleiner als ein vierter voreingestellter Schwellenwert sind; und
Bestimmen, falls die MCS-Informationen kleiner als der dritte voreingestellte Schwellenwert sind und die CQI-Informationen kleiner als der vierte voreingestellte Schwellenwert sind, des UE als eine zweite Klasse.

4. Das DMRS-Zuweisungsverfahren nach Anspruch 1, wobei die ersten Systemrahmen-Informationen erste Frequenzökonomie umfasst, und die zweiten Systemrahmen-Informationen zweite Frequenzökonomie umfasst;
Bestimmen einer Klassifizierungsstufe des UE der ersten Klasse umfasst:
Bestimmen einer ersten Gerätebewertungsstrategie in Bezug auf die erste Frequenzökonomie und die zweite Frequenzökonomie des UE der ersten Klasse gemäß der ersten Frequenzökonomie und der zweiten Frequenzökonomie des UE der ersten Klasse; und
Erhalten der Klassifizierungsstufe des UE der ersten Klasse basierend auf der ersten Gerätebewertungsstrategie und der ersten Frequenzökonomie und der zweiten Frequenzökonomie des UE der ersten Klasse; und
Bestimmen einer Klassifizierungsstufe des UE der zweiten Klasse umfasst:
Bestimmen einer zweiten Gerätebewertungsstrategie in Bezug auf die erste Frequenzökonomie und die zweite Frequenzökonomie des UE der zweiten Klasse, gemäß der ersten Frequenzökonomie und der zweiten Frequenzökonomie des UE der zweiten Klasse; und
Erhalten der Klassifizierungsstufe des UE der zweiten Klasse basierend auf der zweiten Gerätebewertungsstrategie und der ersten Frequenzökonomie und der zweiten Frequenzökonomie des UE der zweiten Klasse.

5. Das DMRS-Zuweisungsverfahren nach Anspruch 4, wobei Erhalten der Klassifizierungsstufe des UE der ersten Klasse umfasst:
Erhalten der Klassifizierungsstufe des UE der ersten Klasse als eine erste Stufe falls die zweite Frequenzökonomie des UE der ersten Klasse um einen ersten voreingestellten Bereich größer als die erste Frequenzökonomie ist; und
Erhalten der Klassifizierungsstufe des UE der ersten Klasse als eine zweite Stufe falls die zweite Frequenzökonomie des UE der ersten Klasse um einen zweiten voreingestellten Bereich größer als die erste Frequenzökonomie ist; und
Erhalten der Klassifizierungsstufe des UE der zweiten Klasse umfasst:
Erhalten der Klassifizierungsstufe des UE der zweiten Klasse als eine dritte Stufe, wenn die zweite Frequenzökonomie des UE der zweiten Klasse kleiner als die erste Frequenzökonomie ist;
Erhalten der Klassifizierungsstufe des UE der zweiten Klasse als eine zweite Stufe wenn die zweite Frequenzökonomie des UE der zweite Klasse um einen dritten voreingestellten Bereich größer als die erste Frequenzökonomie ist; und
Erhalten der Klassifizierungsstufe des UE der zweiten Klasse als eine erste Stufe wenn die zweite Frequenzökonomie des UE der zweite Klasse um einen vierten voreingestellten Bereich größer als die erste Frequenzökonomie ist.

6. Das DMRS-Zuweisungsverfahren nach Anspruch 5, wobei Neuzuweisen des DMRS des UE gemäß den DMRS-Informationen umfasst:
Neuzuweisen eines DMRS des UE der ersten Klasse über DMRS-Informationen des UE der ersten Klasse (S280) falls die Klassifizierungsstufe des UE der ersten Klasse nach der Neuklassifizierung eine zweite Stufe ist; und/oder
Neuzuweisen eines DMRS des UE der zweiten Klasse über DMRS-Informationen des UE der zweiten Klasse (S290) falls die Klassifizierungsstufe des UE der zweiten Klasse nach der Neuklassifizierung eine erste Stufe ist.

7. Das DMRS-Zuweisungsverfahren nach Anspruch 6, wobei die DMRS-Informationen des UE der ersten Klasse eine Verringerung der Zeitbereichsressourceninformationen und/oder Frequenzressourceninformationen umfassen, und Neuzuweisen eines DMRS des UE der ersten Klasse über DMRS-Informationen des UE der ersten Klasse umfasst:
Wiederherstellen der Verbindung zum UE der ersten Klasse gemäß einer voreingestellten RPC-Signalisierung, und Ausgeben der Verringerung von Zeitbereichsressourceninformationen und/oder Frequenzbereichsressourceninformationen an das UE der ersten Klasse, um das DMRS des UE der ersten Klasse neu zuzuweisen.

8. Das DMRS-Zuweisungsverfahren nach Anspruch 6, wobei die DMRS-Informationen des UE der zweiten Klasse eine Erhöhung der Zeitbereichsressourceninformationen und Frequenzressourceninformationen umfassen, und Neuzuweisen eines DMRS des UE der zweiten Klasse über DMRS-Informationen des UE der zweiten Klasse umfasst:
Wiederherstellen der Verbindung zum UE der zweiten Klasse gemäß einer voreingestellten RPC-Signalisierung, und Ausgeben der Erhöhung von Zeitbereichsressourceninformationen und/oder Frequenzbereichsressourceninformationen an das UE der zweiten Klasse, um das DMRS des UE der zweiten Klasse neu zuzuweisen.

9. Das DMRS-Zuweisungsverfahren nach Anspruch 1, wobei nach Neuklassifizieren des UE der ersten Klasse und/oder der UE der zweiten Klasse gemäß den Meldeinformation und einem voreingestellten Strafstufenmechanismus nach Erhalten der Klassifizierungsstufen weiter umfasst:
falls die Klassifizierungsstufe des UE der ersten Klasse nach der Neuklassifizierung eine erste Stufe ist, Erhalten von DMRS-Informationen zum dynamischen Anpassen des UE der ersten Klasse gemäß einen neu hinzugefügten oder erweiterten DCI-Feld (S380); und/oder
falls die Klassifizierungsstufe des UE der zweiten Klasse nach der Neuklassifizierung eine zweite Klasse oder eine dritte Klasse ist, Erhalten von DMRS-Informationen zum dynamischen Anpassen des UE der zweiten Klasse gemäß einen neu hinzugefügten oder erweiterten DCI-Feld (S390).

10. Das DMRS-Zuweisungsverfahren nach Anspruch 1, wobei die Meldeinformationen Teilnehmer-Endgerät, CPE-Informationen, CQI-Informationen und/oder Blockfehlerrate, Bler-Informationen umfassen; und Klassifizieren eines UE gemäß Meldeinformation des UE zum Erhalten von Klassifizierungsinformationen des UE umfasst:
Bestimmen einer zweiten Geräteklassifizierungsstrategie in Bezug auf das UE basierend auf den CPE-Informationen (S401); und
Bestimmen einer Klasse des UE basierend auf der zweiten Geräteklassifizierungsstrategie gemäß den CPE-Informationen, den CQI-Informationen und/oder den Bler-Informationen, um Klassifizierungsinformationen des UE zu erhalten (S402).

11. Das DMRS-Zuweisungsverfahren nach Anspruch 10, wobei die CPE-Informationen RI-Informationen und MCS-Informationen umfassen, und Bestimmen einer Klasse des UE basierend auf der zweiten Geräteklassifizierungsstrategie gemäß den CPE-Informationen, den CQI-Informationen und/oder den Bler-Informationen, um Klassifizierungsinformationen des UE zu erhalten, umfasst:
Bestimmen des UE als eine erste Klasse falls die RI-Informationen größer oder gleich einem fünften voreingestellten Schwellenwert sind, die Bler-Informationen kleiner oder gleich einem fünften voreingestellten Bereich sind und die CQI-Informationen einem sechsten voreingestellten Schwellenwert entsprechen; und
Bestimmen des UE als eine zweite Klasse falls die MCS-Informationen kleiner als ein siebter voreingestellter Schwellenwert sind.

12. Eine New Radio, NR-Basisstation, wobei die NR-Basisstation einen Speicher und einen Prozessor umfasst, der Speicher dazu konfiguriert ist, ein Computerprogramm zu speichern, welches Anweisungen umfasst, welche bei Ausführung des Computerprogramm durch den Prozessor, den Prozessor veranlassen, die Schritte des DMRS-Zuweisungsverfahrens nach einem der Ansprüche 1 bis 11 auszuführen.

13. Ein Computerlesbares Speichermedium zur computerlesbaren Speicherung, wobei das Speichermedium ein oder mehrere Programme speichert, wobei das eine oder die mehreren Programme Anweisungen umfassen, welche, wenn das eine oder die mehreren Programme von einem Computer ausgeführt werden, den Computer veranlassen, die Schritte des DMRS-Zuweisungsverfahrens nach einem der Ansprüche 1 bis 11 auszuführen.

## Revendications

1. Un procédé d'allocation de signal de référence de démodulation, DMRS, le procédé est mis en œuvre par une station de base New Radio, NR, et le procédé comprend :
la réception d'informations de rapport provenant d'un équipement utilisateur, UE ;
la classification de l'UE selon les informations de rapport de l'UE pour obtenir des informations de classification de l'UE (S110), dans lequel les informations de classification incluent une classe et un niveau de classification ;
l'obtention, selon un champ d'informations de contrôle de liaison descendante, DCI, et les informations de classification, d'informations de DMRS pour l'ajustement dynamique de ressources du domaine temporel et/ou de ressources du domaine fréquentiel de l'UE, et la réallocation d'un DMRS de l'UE selon les informations de DMRS (S120) ;
**caractérisé en ce que** :
les informations de classification comprennent une première classe et/ou une deuxième classe, et l'obtention, selon le champ de DCI et les informations de classification, des informations de DMRS pour l'ajustement dynamique des ressources du domaine temporel et/ou des ressources du domaine fréquentiel de l'UE comprend :
l'obtention, selon un champ de DCI nouvellement ajouté ou étendu, d'informations de DMRS pour l'ajustement dynamique de ressources du domaine temporel et/ou de ressources du domaine fréquentiel d'un UE de première classe (S220) ; et/ou
l'obtention, selon un champ de DCI nouvellement ajouté ou étendu, d'informations de DMRS pour l'ajustement dynamique de ressources du domaine temporel et/ou de ressources du domaine fréquentiel d'un UE de deuxième classe (S230) ; et
avant la réallocation du DMRS de l'UE selon les informations de DMRS, le procédé comprend en outre :
l'enregistrement de premières informations de trame système et de secondes informations de trame système de l'UE de première classe, et/ou de premières informations de trame système et de secondes informations de trame système de l'UE de deuxième classe, respectivement (S240) ;
la détermination, selon les premières informations de trame système et les secondes informations de trame système de l'UE de première classe, d'un niveau de classification de l'UE de première classe (S250) ;
la détermination, selon les premières informations de trame système et les secondes informations de trame système de l'UE de deuxième classe, d'un niveau de classification de l'UE de deuxième classe (S260) ; et
la reclassification, selon les informations de rapport et un mécanisme de niveau de sanction prédéfini, de l'UE de première classe et/ou de l'UE de deuxième classe après l'obtention des niveaux de classification (S270).

2. Le procédé d'allocation de DMRS selon la revendication 1, dans lequel les informations de rapport comprennent des informations de schéma de modulation et de codage, MCS, des informations de modulation d'amplitude en quadrature, QAM, et/ou des informations d'indicateur de qualité de canal, CQI ; et la classification d'un UE selon des informations de rapport de l'UE comprend :
la détermination, sur la base des informations de QAM, d'un mode de modulation couramment utilisé dans l'UE et d'une première stratégie de classification d'équipements liée au mode de modulation couramment utilisé de l'UE ; et
la détermination, sur la base de la première stratégie de classification d'équipements, d'une classe de l'UE selon les informations de MCS et les informations de CQI.

3. Le procédé d'allocation de DMRS selon la revendication 2, dans lequel la détermination, sur la base de la première stratégie de classification d'équipements, d'une classe de l'UE selon les informations de MCS et les informations de CQI comprend :
la détermination, si le mode de modulation est un premier mode de modulation prédéfini, si les informations de MCS sont supérieures à une première valeur seuil prédéfinie et si les informations de CQI sont supérieures à une deuxième valeur seuil prédéfinie ; et
la détermination, si les informations de MCS sont supérieures à la première valeur seuil prédéfinie et les informations de CQI sont supérieures à la deuxième valeur seuil prédéfinie, de l'UE comme étant de première classe ; et/ou
la détermination, si le mode de modulation est un second mode de modulation prédéfini, si les informations de MCS sont inférieures à une troisième valeur seuil prédéfinie et si les informations de CQI sont inférieures à une quatrième valeur seuil prédéfinie ; et
la détermination, si les informations de MCS sont inférieures à la troisième valeur seuil prédéfinie et les informations de CQI sont inférieures à la quatrième valeur seuil prédéfinie, de l'UE comme étant de deuxième classe.

4. Le procédé d'allocation de DMRS selon la revendication 1, dans lequel les premières informations de trame système comprennent un premier rendement spectral, et les secondes informations de trame système comprennent un second rendement spectral ;
la détermination d'un niveau de classification de l'UE de première classe comprend :
la détermination, selon le premier rendement spectral et le second rendement spectral de l'UE de première classe, d'une première stratégie de classement d'équipements liée au premier rendement spectral et au second rendement spectral de l'UE de première classe ; et
l'obtention, sur la base de la première stratégie de classement d'équipements et du premier rendement spectral et du second rendement spectral de l'UE de première classe, du niveau de classification de l'UE de première classe ; et
la détermination d'un niveau de classification de l'UE de deuxième classe comprend :
la détermination, selon le premier rendement spectral et le second rendement spectral de l'UE de deuxième classe, d'une seconde stratégie de classement d'équipements liée au premier rendement spectral et au second rendement spectral de l'UE de deuxième classe ; et
l'obtention, sur la base de la seconde stratégie de classement d'équipements et du premier rendement spectral et du second rendement spectral de l'UE de deuxième classe, du niveau de classification de l'UE de deuxième classe.

5. Le procédé d'allocation de DMRS selon la revendication 4, dans lequel l'obtention du niveau de classification de l'UE de première classe comprend :
l'obtention, si le second rendement spectral de l'UE de première classe est supérieur au premier rendement spectral d'une première plage prédéfinie, du niveau de classification de l'UE de première classe comme étant un premier niveau ; et
l'obtention, si le second rendement spectral de l'UE de première classe est supérieur au premier rendement spectral d'une deuxième plage prédéfinie, du niveau de classification de l'UE de première classe comme étant un deuxième niveau ; et
l'obtention du niveau de classification de l'UE de deuxième classe comprend :
l'obtention, lorsque le second rendement spectral de l'UE de deuxième classe est inférieur au premier rendement spectral, du niveau de classification de l'UE de deuxième classe comme étant un troisième niveau ;
l'obtention, lorsque le second rendement spectral de l'UE de deuxième classe est supérieur au premier rendement spectral d'une troisième plage prédéfinie, du niveau de classification de l'UE de deuxième classe comme étant un deuxième niveau ; et
l'obtention, lorsque le second rendement spectral de l'UE de deuxième classe est supérieur au premier rendement spectral d'une quatrième plage prédéfinie, du niveau de classification de l'UE de deuxième classe comme étant un premier niveau.

6. Le procédé d'allocation de DMRS selon la revendication 5, dans lequel la réallocation du DMRS de l'UE selon les informations de DMRS comprend :
la réallocation, si le niveau de classification de l'UE de première classe est un deuxième niveau après une reclassification, d'un DMRS de l'UE de première classe via les informations de DMRS de l'UE de première classe (S280) ; et/ou
la réallocation, si le niveau de classification de l'UE de deuxième classe est un premier niveau après une reclassification, d'un DMRS de l'UE de deuxième classe via les informations DMRS de l'UE de deuxième classe (S290).

7. Le procédé d'allocation de DMRS selon la revendication 6, dans lequel les informations de DMRS de l'UE de première classe comprennent une diminution d'informations de ressources du domaine temporel et/ou d'informations de ressources spectrales, et la réallocation d'un DMRS de l'UE de première classe via les informations de DMRS de l'UE de première classe comprend :
la reconnexion à l'UE de première classe selon une signalisation RPC prédéfinie, et l'émission de la diminution d'informations de ressources du domaine temporel et/ou d'informations de ressources du domaine fréquentiel à l'UE de première classe pour réallouer le DMRS de l'UE de première classe.

8. Le procédé d'allocation de DMRS selon la revendication 6, dans lequel les informations de DMRS de l'UE de deuxième classe comprennent une augmentation d'informations de ressources du domaine temporel et d'informations de ressources spectrales, et la réallocation d'un DMRS de l'UE de deuxième classe via les informations de DMRS de l'UE de deuxième classe comprend :
la reconnexion à l'UE de deuxième classe selon une signalisation RPC prédéfinie, et l'émission de l'augmentation d'informations de ressources du domaine temporel et/ou d'informations de ressources du domaine fréquentiel vers l'UE de deuxième classe pour réallouer le DMRS de l'UE de deuxième classe.

9. Le procédé d'allocation de DMRS selon la revendication 1, dans lequel, après la reclassification, selon les informations de rapport et un mécanisme de niveau de sanction prédéfini, de l'UE de première classe et/ou de l'UE de deuxième classe après l'obtention des niveaux de classification comprend en outre :
si le niveau de classification de l'UE de première classe est un premier niveau après la reclassification, l'obtention d'informations de DMRS pour l'ajustement dynamique de l'UE de première classe selon un champ de DCI nouvellement ajouté ou étendu (S380) ; et/ou
si le niveau de classification de l'UE de deuxième classe est une deuxième classe ou une troisième classe après la reclassification, l'obtention d'informations de DMRS pour l'ajustement dynamique de l'UE de deuxième classe selon un champ de DCI nouvellement ajouté ou étendu (S390).

10. Le procédé d'allocation de DMRS selon la revendication 1, dans lequel les informations de rapport comprennent des informations d'équipements des locaux d'abonné, CPE, des informations de CQI et/ou des informations de taux d'erreurs sur les blocs, Bler ; et la classification d'un UE selon des informations de rapport de l'UE pour obtenir des informations de classification de l'UE comprend :
la détermination d'une seconde stratégie de classification d'équipements liée à l'UE sur la base des informations de CPE (S401) ; et
la détermination, sur la base de la seconde stratégie de classification d'équipements, d'une classe de l'UE selon les informations de CPE, les informations de CQI et/ou les informations de Bler pour obtenir des informations de classification de l'UE (S402).

11. Le procédé d'allocation de DMRS selon la revendication 10, dans lequel les informations de CPE comprennent des informations de RI et des informations de MCS, et la détermination, sur la base de la seconde stratégie de classification d'équipements, d'une classe de l'UE selon les informations de CPE, les informations de CQI et/ou les informations de Bler pour obtenir des informations de classification de l'UE comprend :
la détermination, si les informations de RI sont supérieures ou égales à une cinquième valeur seuil prédéfinie, les informations de Bler sont inférieures ou égales à une cinquième plage prédéfinie et les informations de CQI sont d'une sixième valeur seuil prédéfinie, de l'UE comme étant d'une première classe ; et
la détermination, si les informations de MCS sont inférieures à une septième valeur seuil prédéfinie, de l'UE comme étant de deuxième classe.

12. Une station de base New Radio, NR, dans laquelle la station de base NR comprend une mémoire et un processeur, la mémoire est configurée pour stocker un programme informatique comprenant des instructions qui, lorsque le programme informatique est exécuté par le processeur, amènent le processeur à effectuer les étapes du procédé d'allocation de DMRS selon l'une quelconque des revendications 1 à 11.

13. Un support de stockage lisible par ordinateur pour le stockage lisible par ordinateur, dans lequel le support de stockage stocke un ou plusieurs programmes, les un ou plusieurs programmes comprenant des instructions qui, lorsque les un ou plusieurs programmes sont exécutés par un ordinateur, amènent l'ordinateur à effectuer les étapes du procédé d'allocation de DMRS selon l'une quelconque des revendications 1 à 11.
